# EUROPÄISCHE PATENTSCHRIFT

(11) **EP 1 190 375 B1**
(45) Veröffentlichungstag und Bekanntmachung des Hinweises auf die Patenterteilung: **17.12.2003**
(21) Anmeldenummer: 00935178.4
(22) Anmeldetag: 07.06.2000
(51) Int. Cl.: G06K 19/06

(54) **DATENSTREIFEN UND VERFAHREN ZUR KODIERUNG UND DEKODIERUNG GEDRUCKTER DATEN**
DATA STRIP AND METHOD FOR CODING AND DECODING PRINTED DATA
BANDES DE DONNEES ET PROCEDE POUR CODER ET DECODER DES DONNEES IMPRIMEES

(30) Priorität: 09.06.1999 DE 19926194
(43) Veröffentlichungstag der Anmeldung: 27.03.2002
(73) Patentinhaber: Datasound Gesellschaft zur Entwicklung und Vermarktung Digitaler Audio- und Informationssysteme GmbH, 67061 Ludwigshafen (DE)
(72) Erfinder: WIRNITZER, Bernhard, D-69502 Hemsbach (DE); BRUGGER, Andreas, D-67227 Frankenthal (DE); KRÜGER, Tilmann, D-67112 Mutterstadt (DE); MEINERZ, Detlev, D-68161 Mannheim (DE)
(74) Vertreter: Isenbruck, Günter
(86) Internationale Anmeldenummer: EP0005211
(87) Internationale Veröffentlichungsnummer: WO00077724

(56) Entgegenhaltungen:
- US-A- 4 782 221
- US-A- 5 170 044
- US-A- 5 706 099

## Beschreibung

Die Erfindung betrifft einen Datenstreifen zur Speicherung von gedruckten kodierten Daten mit hoher Datendichte sowie ein Verfahren zum Kodieren und Dekodieren von Daten auf gedruckten Unterlagen.

Zur Speicherung von Kennziffern auf Produkten oder Gegenständen sind Balkenkodes (Barkkodes) seit langem bekannt und weit verbreitet. Um eine Information zu kodieren, werden Balken verschiedener Breite in unterschiedlichem Abstand auf den Gegenstand gedruckt. Ein Lesegerät kann das Balkenmuster aufnehmen und die Information dekodieren. Die Datendichte derartiger Balkenkodes liegt bei wenigen Bits pro Quadratzentimeter Druckfläche. Ein Beispiel ist die US 3 211 470, in dem die Datensicherheit durch Einbau von Redundanz erhöht wird.

Um höhere Datendichten zu erreichen werden Datenkodes eingesetzt, die aus mehreren Datenlinien aufgebaut sind. In der WO 86/05906 wird ein solcher Datenstreifen beschrieben. Dieser Datenstreifen enthält spezielle Sychronisationsgebiete, die dazu dienen das optische Lesegerät auf die Datenlinien auszurichten und die sogenannte Scannrate zu steuern, mit der das Lesegerät Zeile für Zeile aufnimmt, während es über den Datenstreifen geführt wird. In der EP 0 670 555A1 sind die Synchronisationsgebiete in Form von Rändern von Teilgebieten des Datenstreifens vorgesehen. Die Firma Cobblestone Software Inc. beschreibt unter www.paperdisk.com ein Verfahren mit Synchronmarken als zweidimensionale Erweiterung von Balkenkodes. Sie will damit Datendichten von bis zu 4 Megabyte auf einen Blatt von 8 Zoll mal 11 Zoll in Form sogenannter Datenfliesen unterbringen können.

Ein Nachteil dieser bekannten Techniken ist, daß die erzielte Datendichte für unterschiedliche Anwendungen immer noch zu gering ist. Wünscht man z. B. in Büchern oder Prospekten Hörproben von Musik oder auch Sprache auf einen Datenstreifen abzuspeichern, so entsprechen einer Hörprobe von 10 Sekunden Sprache oder Musik in hoher Qualität mehrere hundert Kilobyte an Daten. Die Größe der hierzu nötigen Druckfläche ist nicht akzeptabel.
Erhöht man bei den bekannten Kodes die Datendichte dadurch, daß man die Punkte stets kleiner druckt, so stößt der Druckprozeß an Grenzen, z.B. dadurch, daß die Punkte ineinander fließen. Schwankt die Qualität des Druckprozesses so sind die Datenstreifen unbrauchbar. Gleichzeitig wächst bei kleinen Druckpunkten die Anforderung an die Abbildungsqualität des Lesegerätes. Typische und kritische Abbildungsfehler sind dabei Verzeichnung, Astigmatismus, Koma und Schattenbilder wie sie durch Reflexionen an parallelen Platten entstehen. Lesegräte mit einfachen Optiken sind dann nicht mehr einsetzbar. Aber auch hochwertige Abbildungsoptiken stoßen aufgrund der Beugungstheorie an physikalische Grenzen. Der Druckprozeß und die Abbildungsoptik bedingen, daß die Synchronisationsstrukturen für das Lesegerät unscharf oder verzerrt erscheinen und die Synchronisation auf den Kode trotz aufwendiger Technik versagt. Der Grund hierfür ist, daß die genannten Störungen in nicht vorhersagbarer Stärke und Kombination auftreten, und daß die Störungen zudem ortsvariant sind. Bei hohen Datendichten ist es nicht möglich, den besonders kritischen Einfluß der Verzeichnung durch eine Koordinatentransformation zu korrigieren, sobald einzelne Druckpunkte auseinander fließen oder die Druckpunkte unscharf abgebildet werden. Werden in einem Kode-Lesegerät Bildsensonsoren, wie z.B. CCD-Zeilen und CCD-Flächensensoren verwendet, ensteht ein weiteres Problem. Die genannten Bildsensoren enthalten zweidimensional ausgedehnte Sensorzellen. Falls die Sensorzellen nicht wesentlich kleiner als das Synchronisationsraster sind, versagen auch in diesem Falle die Sychronisationsverfahren.

Die bekannten Verfahren erfordern eine sogenannte Überabtastung um den Faktor 4 oder besser 6, da das Synchronisationsraster unterschiedlich aufgenommen wird, je nachdem wie das Synchronisationsraster und das Raster des Bildsensors zusammenfallen. Die Nachteile kleiner Sensorzellen sind jedoch die geringe Lichtempfindtichkeit, der hohe Preis der Sensoren und die hohe Datenmenge beim Auslesen.

Ein weiterer Nachteil der bekannten Kodes ist die Empfindlichkeit gegen Verschmutzungen, Abnützung oder Verformungen des Datenträgers. Weiterhin sind die groben Daten- und Synchronisationsstrukturen für das menschliche Auge erkennbar und können in verschiedenen Anwendungen störend wirken. Die Kodes bieten außerdem keine Möglichkeit zur gleichzeitigen Übermittelung visueller Information, wie z.B. Firmenlogos oder Bilder.

Ein Verfahren sowie eine Vorrichtung gemäß den Oberbegriffen der Ansprüche 1 und 11 ist aus der US 5 170 044 bekannt.

Es stellte sich daher die Aufgabe, Verfahren und eine Vorrichtung zur Dekodierung dieser gedruckten Daten zu schaffen, die eine hohe Datendichte bei gleichzeitiger hoher Störunempfindlichkeit des Kodes ermöglichen wobei dem Kode zusätzliche, insbesondere visuelle Information überlagert werden kann und eine zuvertässige Kodierung und Dekodierung dieser gedruckten Daten gewährleistet wird.

Diese Aufgabe wird erfindungsgemäß auf die in den Ansprüchen wiedergegebene Weise gelöst.

Die erfindungsgemäß verwendeten Muster mit charakteristischer und vordefinierter Form können so fein sein, daß sie das menschliche Auge wegen zu geringer Ortsauflösung als homogene Punkte wahrnimmt. Die typische Dimension eines solchen Musters liegt bei ca. 0,02 mm, bedingt durch die Drucktechnik. Grundsätzlich können erfindungsgemäß auch andere Übertragungsverfahren eingesetzt werden, wie beispielsweise Präge- oder Stanztechniken wobei in diesen Fällen die zu bedruckenden Unterlagen vorzugsweise aus festen Materialien, wie Kunststoff oder Metall bestehen.

Die Muster liegen innerhalb definierter zweidimensionaler Zellen, welche in vordefinierter Weise in horizontaler und vertikaler Richtung wiederholt werden.
Ein Muster füllt vorteilig 50% einer Zelle aus, wodurch in der Zelle die bedruckte im wesentlichen gleich der unbedruckten Fläche ist und so der zweidimensionale Datenstreifen dem Auge als homogen gefärbte Fläche erscheint.

Zur Speicherung eines Datenbits wird in den Mustern bevorzugt die bedruckte gegen die unbedruckte Fläche ausgetauscht, besonders vorteilhaft wird ein Muster durch sein Negativbild ersetzt oder nicht.

Zum Beispiel wird ein schwarzes Kreuz auf weißem Grund zu einem weißen Kreuz auf schwarzem Grund. Für das Auge erscheint die Fläche immer noch in einer homogenen Farbe.

Die Muster selbst sind so gestaltet, daß sie nach der Bildaufnahme mit dem Lesegerät besonders gut zu erkennen und gut zu unterscheiden sind. Die Muster können sowohl durch ihre geometrische Form als auch durch die Helligkeitsverteilung charakterisiert sein.

Insbesondere Sätze von orthogonalen Mustern, z. B. ein Muster und das dazugehörige Negativbild sind dabei gut geeignet.

Der Einsatz farbiger Muster in Kombination mit einem Farblesegerät ermöglicht dabei besonders hohe Datendichten. Bei einem Muster mit Gebieten aus den Grundfarben Rot, Grün und Blau entstehen durch das Vertauschen der Farben drei orthogonale Muster. Für das Auge erscheint die Zelle unabhängig vom jeweiligen Muster in einer homogenen Farbe.

Durch die Verwendung mehrerer unterschiedlicher Muster lassen sich in einer zweidimensionalen Zelle mehrere Bits oder Bitfolgen speichern.

Bei der Auswahl der Muster können Verfälschungen, die durch den Druckprozeß oder durch Abbildungseigenschaften der Optik entstehen bereits berücksichtigt werden. Die Muster werden nach bekannten Verfahren so ausgelegt, daß sie möglichst gut übertragen werden und nach der Übertragung gut unterscheidbar sind.
So kann das Problem des Verlaufens von Druckpunkten durch das Drucken von kleineren Punkten umgangen werden.

Ebenso können mit dem erfindungsgemäßen Datenstreifen und dem erfindungsgemäßen Verfahren die Auswirkungen von Astigmatismus oder Koma unterdrückt werden.

Bei bekannten Übertragungseigenschaften des Drucks und des Lesegeräts ist so mit Hilfe der Systemtheorie eine optimale Auslegung der Muster möglich. Zu berücksichtigen ist dabei, daß die Ortsfrequenzen der Muster nach der Bildaufnahme möglichst nicht mit den Ortsfrequenzen des zufälligen Rauschens zusammenfallen.

Systematische Störungen beim Druck und beim Lesegerät sind dagegen unkritisch, wie beispielsweise das Auftreten eines Schattenbildes, da die Funktion des Dekoders nicht beeinflußt wird. Es ist sogar möglich, daß sich die Bilder der Muster überlappen.

Die Kodierung der Daten erfolgt in Form von zweidimensionalen Zellen, wobei die Zellen an definierten Stellen auf der Unterlage positioniert werden, welche jeweils eines von mindestens zwei unterschiedlichen Mustern mit charakteristischer und vorgegebener Form enthalten. Bei der Dekodierung werden die definierten Muster mit Verfahren der Mustererkennung gesucht und nach der Erkennung auf die zugrundeliegende Bitinformation geschlossen.

Zur Mustererkennung werden dabei vorteilhaft Korrelationen mit festgelegten Suchmustem durchgeführt, um im eingelesenen Datenstreifen nach den Bildern der charakteristischen zweidimensionalen Muster zu suchen.

Die Anzahl der Korrelatoren entspricht im wesentlichen der Anzahl der definierten Muster. Beschreibt man die Helligkeit des Bildes eines Musters durch die Funktion m(x,y) und die Helligkeit des Bildes des eingelesenen Datenstreifen durch d(x,y), so berechnet der Korrelator das Integral kor(x,y) = INTEGRAL {d(x',y') m(x'+x,y'+y)} dx' dy'. Durch Vergleich der Korrelationsintegrale kann auf das zugrundeliegende Suchmuster geschlossen werden. Das Korrelationsintegral kor(x,y) zeigt an den Stellen einen Extremwert, an denen die Zelle in vordefinierter Weise wiederholt wurde.

Statt des Korrelationsintegrals können auch andere Verfahren der Mustererkennung verwendet werden.

Vorteilhaft werden die Daten zur Dekodierung mit einem Gerät eingelesen, dessen Ortsauflösung mindestens einen Faktor 2 über der höchsten Ortsfrequenz des Datenstreifens liegt.

Bevorzugt werden die zur Kodierung verwendeten Muster in vorher definierten Zellen und/oder vorher definierter Reihenfolge auf der Unterlage positioniert, so daß durch Verfälschungen bei schlechter Qualität des Drucks, bei einer schlechten Abbildungsqualität der Optik des Lesegeräts und/oder bei einer Verkippung des Datenstreifens bedingte Abweichungen der Musterstruktur erkannt werden können. Damit ist es möglich zu ermitteln, wie die Muster real übertragen werden und so lineare und nicht lineare Übertragungseigenschaften des Datenübertragungskanals zu beherrschen. Dadurch wird auch in den genannten Fällen eine weitgehend sichere Dekodierung ermöglicht.

Eine weitere Erhöhung der Dekodiersicherheit wird erreicht, indem man den Ort des Maximums der Korrelationsfunktion mit den definierten Positionen der Zellen vergleicht. So läßt sich bestimmen, welche geometrischen Transformationen beim Druck und beim Lesevorgang erfolgten. Beispiele hierfür sind Verzeichnung, Verkippung und Größenänderungen. Die Suchmuster können so entsprechend der Transformation angepaßt werden.

Besonders vorteilhaft werden die in vorher definierten Zellen und/oder vorher definierter Reihenfolge auf der Unterlage positionierten Muster als Suchmuster für die Mustererkennung verwendet, so daß auch größere Abweichungen von der Sollstruktur kompensiert werden können.

Durch den erfindungsgemäßen Kode in Verbindung mit dem erfindungsgemäßen Verfahren ist die Dekodierung im Prinzip bei beliebiger Verzeichnungen möglich, solange die Muster erkennbar bleiben.

Da die Muster an definierten Stellen in einer Zelle liegen ergibt sich ein weiterer Vorteil der erfindungsgemäßen Lösung daraus, daß es möglich ist die lokale Verzeichnung oder Verkippung zu messen, indem man bei der Mustererkennung den Ort an der das Muster liegt bestimmt und diesen mit der definierten Sollposition vergleicht.

Mit dieser Information werden die Suchmuster angepaßt, z.B. gedreht oder in der Größe verändert. Mit einem parametrisierten mathematischen Modell der Verzeichnung und Verkippung können die Parameter dieses Modells mit Hilfe eines Kaiman-Filters geschätzt werden. Die Erkennung wird hierdurch noch unempfindlicher gegen Rauschen.

Die erfindungsgemäße Anpassung der Muster bei der Mustererkennung ermöglicht eine deutliche Erhöhung der Sicherheit der Dekodierung bei gleichzeitig erhöhter Datendichte.

Experimente haben gezeigt, daß mit Hilfe der erfindungsgemäßen Muster und des erfindungsgemäßen Verfahrens eine völlig unerwartete Erhöhung der Datendichte ermöglicht wird. Es konnten Datendichten über 10 Kilobyte pro Quadratzentimeter Druckfläche erzielt werden. Damit ist es zum Beispiel möglich durch das Bedrucken der Innen- und Außenseite einer CD-Hülle bis zu 20 Minuten Musik zu speichern, nachdem die Musikdaten mit gängigen Verfahren komprimiert wurden.

Das Dekodieren der Datenbits wird durch die erfindungsgemäße Kodierung in Kombination mit moderner Bildverarbeitung überraschend zuverlässig und sicher, trotz der hohen Datendichte. Es hat sich gezeigt, daß gerade bei kleinen Zellgrößen und bei Mustern mit einer Feinstruktur, die vom menschlichen Auge nicht mehr aufgelöst wird, eine besonders zuverlässige Dekodierung möglich ist.

Im Gegensatz zu bekannten Kodes, sind eine wellige Unterlage oder Ungleichmäßigkeiten bei der Bewegung des Lesegerätes unkritisch. Ebenso können Verschmutzungen der Optik kompensiert werden.

Der erfindungsgemäße Datenstreifen hat den Vorteil, daß er grundsätzlich ohne Synchronisationsgebiete auskommt.

Da eine Synchronisation im herkömmlichen Sinne entfällt, entfällt auch die bei der Dekodierung für die Synchronisation nötige hohe Überabtastung um einen Faktor 4 bis 6.

Die Mustererkennung sucht das wahrscheinlichste Muster in einer Zelle und schließt daraus auf die zugrundeliegenden Informationsbits. Für die Mustererkennung ist grundsätzlich keine Überabtastung nötig. Als vorteilhaft hat sich jedoch eine Überabtastung um einen Faktor 1,5 bis 2 erwiesen.

Da die Überabtastung in horizontaler und vertikaler Richtungen erfolgt, sinkt die im Lesegerät zu verarbeitende Datenmenge im Vergleich zu bekannten Verfahren um mehr als den Faktor 7.

Das erfindungsgemäße Verfahren ermöglicht eine weitgehend sichere Dekodierung auch für den Fall, daß die gedruckten Muster, z.B. aufgrund einer schlechten Abbildung, stark ineinander fließen. Da jedes der definierten Muster für sich die Nachbarzellen gleich beeinflußt, ist es möglich, nachdem ein Muster einmal erkannt wurde den Einfluß auf die Nachbarzellen in einer Entscheidungsrückführung bei der Mustererkennung zu berücksichtigen.

Erfindungsgemäß kann den kodierten Daten zusätzliche, insbesondere visuelle Information überlagert werden, ohne daß die Datendichte reduziert wird.
Dies kann dadurch geschehen, daß die Zelle oder auch das Muster in der Zelle in der Größe verändert wird. Hierdurch erscheint die Zelle für den Betrachter heller oder dunkler. Drucktechnisch verursachte Größenänderungen des charakteristischen Musters oder der Zelle bis 50% sind ohne weiteres möglich.

Besonders vorteilig ist aber die Überlagerung von Bildinformationen durch eine Veränderung der Druckfarbe. Dies kann so erfolgen, daß sie für das Lesegerät weitgehend unbemerkt bleibt. Wird z.B. ein optisches Lesegerät mit einem Rotfilter verwendet, so erscheinen eine grüne, gelbe oder schwarze Druckfarbe gleichsam mit geringer Bildintensität. Auch die Helligkeit der Muster kann zur Überlagerung von visueller Information variiert werden.
Experimente zeigen, daß Schwankungen der Bildintensität bis zu 50% akzeptabel sind.

Im erfindungsgemäßen Datenstreifen können zur Überlagerung von visueller Information auch datenfreie Bereiche belassen werden. Dies ist beispielsweise möglich, wenn vollflächige Bildstrukturen, wie beispielsweise scharze Augen in abgebildeten Gesichtern oder dergleichen den kodierten Daten überlagert werden und durch große sehr dunkle Bereiche eine Kodierung nicht möglich ist.
In diesem Fall werden bevorzugt in definierten Zellen Kennungen kodiert, die die Grenzen datenfreien Bereiche auf dem Datenstreifen festiegen.

Im folgenden wird die Erfindung anhand von Zeichnungen und Ausführungsbeispielen erläutert. Dabei zeigen:
- **Fig. 1**: die Möglichkeiten für die Kodierung eines einzelnen Datenbits,
- **Fig. 2**: die periodische Wiederholung der vom Auge nicht auflösbaren Zellen,
- **Fig. 3**: die Erzeugung eines definierten Zeilenversatzes bei der periodische Wiederholung der vom Auge nicht auflösbaren Zellen,
- **Fig. 4**: die Möglichkeit zur Kodierung einer Folge von 3 Bit und
- **Fig. 5**: die Verarbeitungsschritte zum Dekodieren des Kodes.

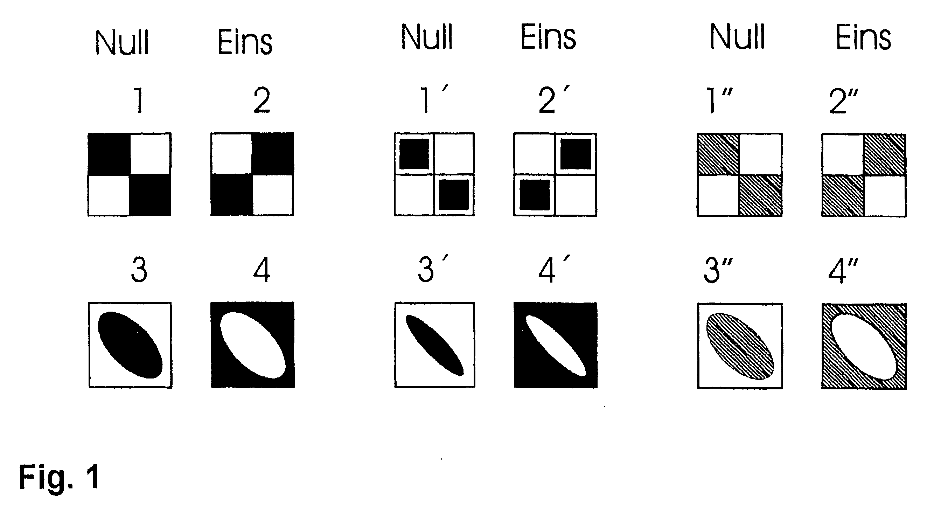

**Fig.1** veranschaulicht beispielhaft eine Möglichkeit, um gleichzeitig eine logische NULL oder EINS und bildhafte Information zu kodieren. Die Druckmuster 1 oder 3 repräsentieren in diesem Fall eine logische Null, die Druckmuster 2 oder 4 repräsentieren eine logische EINS. Die Muster werden so klein gedruckt, daß sie mit dem Auge nicht auflösbar sind und lediglich als grauer Punkt erscheinen. Das Lesegerät kann jedoch die Form der Muster erkennen. Die Überlagerung der bildhaften Information entsteht dadurch, daß bei dem Druckmuster 1" oder 2" die Farbe oder die Helligkeit geändert wird. In dem Druckmuster 1' oder 2' ist das charakteristische Muster verkleinert, um für das Auge einen geringeren Helligkeitseindruck zu erzeugen.

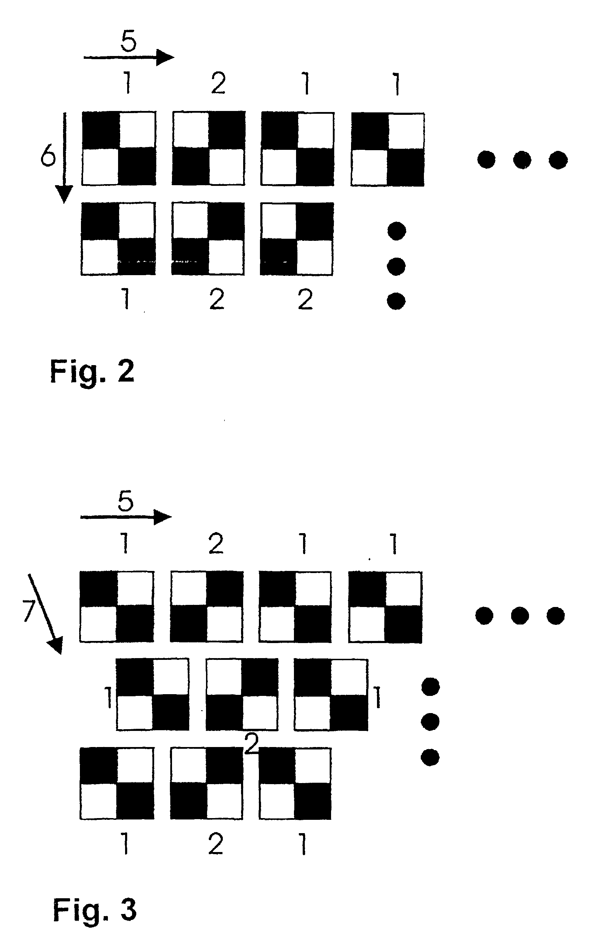

In **Fig. 2** ist gezeigt, wie das Musterpaar 1 und 2 in definiertem Abstand in 2 Richtungen 5 und 6 periodisch wiederholt wird und damit den zweidimensionalen Datenstreifen bildet.

In **Fig. 3** ist das Musterpaar 1 und 2 in diagonaler Richtung 7 periodisch wiederholt. Jede zweite aus Mustern aufgebaute Zeile erscheint dadurch versetzt. Die Erkennung der Muster im Lesegerät wird hierdurch erleichtert.

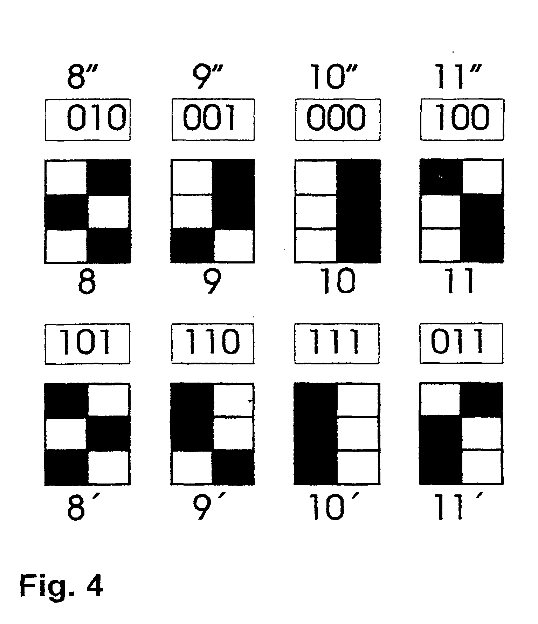

Die in **Fig. 4** dargestellte Verwendung von vier komplexeren Mustern 8, 9, 10 und 11 ermöglicht zusammen mit den farbinvertierten Mustern 8', 9', 10' und 11' eine Kodierung einer Folge von 3 Bit, wie in den Feldern 8", 9", 10" und 11" dargestellt. Natürlich können auch andere typische zweidimensionale Muster verwendet werden. Entscheidend ist dabei, daß sich die Muster deutlich unterscheiden, so daß das Lesegerät sie gut erkennen kann.

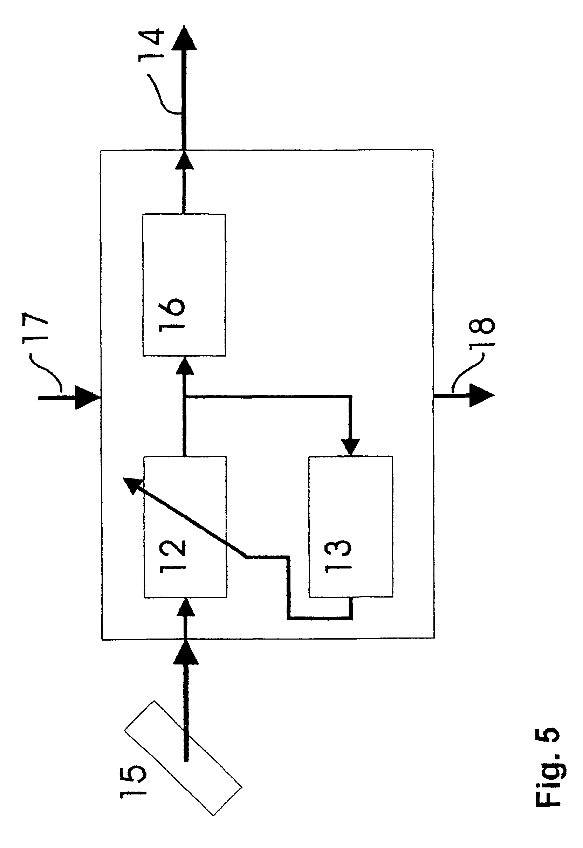

Die prinzipielle Funktion eines entsprechenden Lesegeräts ist in **Fig.5** in einem Blockschema dargestellt. Das vom Lesegerät aufgenommene Bild des Datenstreifens 15, geht zuerst in einen Verarbeitungsblock 12, der eine Mustererkennung durchführt. Dies kann z.B. durch eine Korrelation der Bilddaten 15 mit dem gedruckten Muster erfolgen. Der Korrelator wird dabei so ausgelegt, daß er von Helligkeitsschwankungen oder Farben des Musters unbeeinflußt bleibt, was eine Überlagerung des Datenstreifens mit Grafiken oder Bildern ermöglicht. Enthält der Datenstreifen verschiedene Muster, so wird mit verschiedenen Mustern korreliert. Auch andere Verfahren der Mustererkennung sind einsetzbar. Nachdem das Muster erkannt ist, wird im Block 16 auf das kodierte Bit, oder auf die kodierte Bitfolge geschlossen und die Bits werden ausgegeben 14. Der Block 13 bestimmt der Ort, an dem das Muster erkannt wurde und vergleicht es mit dem vordefinierten Ort 17, an dem das Muster erwartet wurde. Weichen beide Orte voneinander ab, so ist das Bild des Datenstreifens verschoben, verdreht oder verzeichnet. Im Block 12 zur Mustererkennung werden dann die Suchmuster entsprechend angepaßt und die Mustererkennung wird erneut durchgeführt. Zusätzlich werden die Orte neu bestimmt an denen die Muster erwartet werden. Diese neuen Musterorte 18 werden im nächsten Verarbeitungszyklus als definierte Musterorte 18 verwendet.

## Patentansprüche

1. Verfahren zur Kodierung und Dekodierung von Daten auf gedruckten Unterlagen, wobei die Kodierung in Form von zweidimensionalen Zellen erfolgt, die Zellen an definierten Stellen auf der Unterlage positioniert werden, die Zellen zur Datenspeicherung jeweils eines von mindestens zwei unterschiedlichen Mustern enthalten, und wobei man zur Mustererkennung Korrelationen der zweidimensionalen Zellen mit festgelegten Suchmustem durchführt, um im eingelesenen Datenstreifen nach Bildern der zweidimensionalen Muster zu suchen, **dadurch gekennzeichnet, dass** die Suchmuster auf der gedruckten Unterlage positioniert sind.

2. Verfahren nach Anspruch 1, **dadurch gekennzeichnet, dass** man die lokale Verzeichnung oder Verkippung der Muster misst, indem man bei der Mustererkennung den Ort, an dem das Muster liegt, bestimmt und diesen mit der definierten Sollposition vergleicht.

3. Verfahren nach mindestens einem der Ansprüche 1 bis 2, **dadurch gekennzeichnet, dass** man die Muster invertiert.

4. Verfahren nach mindestens einem der Ansprüche 1 bis 3, **dadurch gekennzeichnet, dass** man innerhalb der Zellen bedruckte und unbedruckte Flächen etwa gleicher Größe verwendet.

5. Verfahren nach mindestens einem der Ansprüche 1 bis 4, **dadurch gekennzeichnet, dass** die Muster durch geometrische Form und/oder Helligkeitsverteilung verändert werden.

6. Verfahren nach mindestens einem der Ansprüche 1 bis 5, **dadurch gekennzeichnet, dass** man Muster mit mindestens zwei unterschiedlichen Farben herstellt und durch Austausch der Farbe kodiert.

7. Verfahren nach mindestens einem der Ansprüche 1 bis 6, **dadurch gekennzeichnet, dass** man der Speicherinformation vom Menschen wahrnehmbare, insbesondere visuelle Information überlagert.

8. Verfahren nach mindestens einem der Ansprüche 1 bis 7, **dadurch gekennzeichnet, dass** man die Größe der Zellen und/oder der Muster verändert.

9. Verfahren nach mindestens einem der Ansprüche 1 bis 8, **dadurch gekennzeichnet, dass** man die zur Kodierung verwendeten Muster in vorher definierten Zellen und/oder in vorher definierter Reihenfolge auf der Unterlage positioniert.

10. Verfahren nach mindestens einem der Ansprüche 1 bis 9, **dadurch gekennzeichnet, dass** durch Aufnahme von Kennungen vorgegebene Bereiche der Unterlage nicht dekodiert werden.

11. Vorrichtung zum Lesen von auf Datenstreifen angeordneten Daten, wobei die Daten in Form von zweidimensionalen Zellen dadurch kodiert sind, daß die Zellen auf dem Datenstreifen an definierten Stellen auf der Unterlage positioniert sind und die Zellen zur Datenspeicherung jeweils eines von zwei unterschiedlichen Mustern enthalten, mit einem Dekoder, der Mittel zur Mustererkennung durch Korrelation der zweidimensionalen Zellen mit festgelegten Suchmustem aufweist, sowie Mittel, um in eingelesenen Datenstreifen nach Bildern der zweidimensionalen Muster zu suchen, **dadurch gekennzeichnet, dass** die Suchmuster auf der gedruckten Unterlage positioniert sind.

12. Vorrichtung nach Anspruch 11, **dadurch gekennzeichnet, daß** der Dekoder Mittel zur Messung der lokalen Verzeichnung oder Verkippung der Muster aufweist, wobei bei der Mustererkennung der Ort, an dem das Muster liegt bestimmt und dieser mit der definierten Soliposition verglichen wird.

13. Vorrichtung nach Anspruch 10 oder 11, **dadurch gekennzeichnet, daß** der Dekoder Mittel zur Invertierung der Muster aufweist.

14. Vorrichtung nach mindestens einem der Ansprüche 10 bis 13, **dadurch gekennzeichnet, daß** innerhalb der Zellen des Datenstreifens bedruckte und unbedruckte Flächen etwa gleicher Größe vorgesehen sind.

15. Vorrichtung nach mindestens einem der Ansprüche 10 bis 14, **dadurch gekennzeichnet, daß** die Muster unterschiedliche geometrische Formen und/oder Helligkeitsverteilungen aufweisen.

16. Vorrichtung nach mindestens einem der Ansprüche 10 bis 15, **dadurch gekennzeichnet, daß** die Muster mindestens zwei unterschiedliche Farben aufweisen und durch Austausch der Farben kodiert sind.

17. Vorrichtung nach mindestens einem der Ansprüche 10 bis 16, **dadurch gekennzeichnet, daß** der Speicherinformation vom Menschen wahrnehmbare, insbesondere visuelle Informationen überlagert sind.

18. Vorrichtung nach mindestens einem der Ansprüche 10 bis 17, **dadurch gekennzeichnet, daß** der Datenstreifen unterschiedliche Größen und/oder Muster aufweist.

19. Vorrichtung nach mindestens einem der Ansprüche 10 bis 18, **dadurch gekennzeichnet, daß** die zur Kodierung verwendeten Muster in definierten Zellen und/oder Reihenfolgen auf der Unterlage positioniert sind.

20. Vorrichtung nach mindestens einem der Ansprüche 10 bis 19, **dadurch gekennzeichnet, daß** durch Aufnahme von Kennungen Bereiche des Datenstreifens nicht kodiert sind.

## Claims

1. Method for coding and decoding of data on printed substrates, with the coding being in the form of two-dimensional cells, the cells being positioned at defined points on the substrate, and the cells for data storage each contain one of at least two different patterns, and with correlations of the two-dimensional cells being carried out using defined search patterns for pattern recognition, in order to search the data strip which is being read for images of the two-dimensional patterns, **characterized in that** the search patterns are positioned on the printed substrate.

2. Method according to Claim 1, **characterized in that** the local distortion or tilting of the patterns is measured by determining the point at which the pattern is located during the pattern recognition process, and by comparing this with the defined nominal position.

3. Method according to at least one of Claims 1 or 2, **characterized in that** the patterns are inverted.

4. Method according to at least one of Claims 1 to 3, **characterized in that** printed and unprinted areas of approximately the same size are used within the cells.

5. Method according to at least one of Claims 1 to 4, **characterized in that** the patterns are varied by geometrical shape and/or brightness distribution.

6. Method according to at least one of Claims 1 to 5, **characterized in that** patterns are produced using at least two different colours, and are coded by interchanging the colours.

7. Method according to at least one of Claims 1 to 6, **characterized in that** the stored information has information which can be perceived by human beings, in particular visual information, superimposed on it.

8. Method according to at least one of Claims 1 to 7, **characterized in that** the size of the cells and/or of the patterns are/is varied.

9. Method according to at least one of Claims 1 to 8, **characterized in that** the patterns which are used for coding are positioned in previously defined cells and/or in a previously defined sequence on the substrate.

10. Method according to at least one of Claims 1 to 9, **characterized in that**, by recording identifiers, predetermined areas of the substrate are not decoded.

11. Apparatus for reading data arranged on data strips, with the data being coded in the form of two-dimensional cells in that the cells are positioned at defined points on the data strip on the substrate and the cells for data storage in each case contain one of two different patterns, having a decoder which has means for pattern recognition by correlation of the two-dimensional cells with defined search patterns, as well as means in order to search for images of the two-dimensional patterns in the data strip that have been read, **characterized in that** the search patterns are positioned on the printed substrate.

12. Apparatus according to Claim 11, **characterized in that** the decoder has means for measurement of the local distortion or tilting of the patterns, with the point at which the pattern is located being determined, and this point being compared with the defined nominal position, during the pattern recognition process.

13. Apparatus according to Claim 10 or 11, **characterized in that** the decoder has means for inversion of the patterns.

14. Apparatus according to at least one of Claims 10 to 13, **characterized in that** printed and unprinted areas of approximately the same size are provided within the cells on the data strip.

15. Apparatus according to at least one of Claims 10 to 14, **characterized in that** the patterns have different geometrical shapes and/or brightness distributions.

16. Apparatus according to at least one of Claims 10 to 15, **characterized in that** the patterns have at least two different colours and are coded by interchanging the colours.

17. Apparatus according to at least one of Claims 10 to 16, **characterized in that** the stored information has information which can be perceived by human beings, in particular visual information, superimposed on it.

18. Apparatus according to at least one of Claims 10 to 17, **characterized in that** the data strip has different sizes and/or patterns.

19. Apparatus according to at least one of Claims 10 to 18, **characterized in that** the patterns which are used for coding are positioned in defined cells and/or sequences on the substrate.

20. Apparatus according to at least one of Claims 10 to 19, **characterized in that**, by recording identifiers, areas of the data strip are not coded.

## Revendications

1. Procédé de codage et de décodage de données sur des supports imprimés, le codage se réalisant sous forme de cellules bi-dimensionnelles, les cellules étant positionnées à des emplacements définis sur les supports, les cellules pour le stockage de données contenant chacune un parmi au moins deux modèles différents, dans lequel, pour la reconnaissance des modèles, on effectue des corrélations des cellules bi-dimensionnelles avec des modèles de recherche prédéterminés, afin de rechercher, dans des bandes de données soumises à lecture, des images des modèles bi-dimensionnelles, **caractérisé en ce qu'**on positionne les modèles de recherche sur les supports imprimés.

2. Procédé selon la revendication 1, **caractérisé en ce que** l'on mesure la distorsion ou l'erreur d'inclinaison locale des modèles en déterminant, lors de la reconnaissance du modèle, l'emplacement où le modèle se situe et on le compare avec la position de consigne définie.

3. Procédé selon au moins l'une des revendications 1 à 2, **caractérisé en ce que** l'on inverse le modèle.

4. Procédé selon au moins l'une des revendications 1 à 3, **caractérisé en ce que** l'on utilise, à l'intérieur des cellules, des surfaces imprimées et non imprimées d'environ la même taille.

5. Procédé selon au moins l'une des revendications 1 à 4, **caractérisé en ce que** les modèles sont modifiés par forme géométrique et/ou par distribution de luminosité.

6. Procédé selon au moins l'une des revendications 1 à 5, **caractérisé en ce que** l'on réalise des modèles avec au moins deux couleurs différentes et on procède au codage par échange des couleurs.

7. Procédé selon au moins l'une des revendications 1 à 6, **caractérisé en ce que** l'on superpose sur les informations stockées des informations perceptibles par l'homme, en particulier des informations visuelles.

8. Procédé selon au moins l'une des revendications 1 à 7, **caractérisé en ce que** l'on varie la taille des cellules et/ou la taille des modèles.

9. Procédé selon au moins l'une des revendications 1 à 8, **caractérisé en ce que** l'on positionne les modèles utilisés pour le codage dans des cellules prédéfinies et/ou selon une séquence prédéfinie sur le support.

10. Procédé selon au moins l'une des revendications 1 à 9, **caractérisé en ce que** suite au captage de signaux caractéristiques, des zones prédéterminées du support ne sont pas décodées.

11. Dispositif pour la lecture de données disposées sur des bandes de données, les données étant codées sous forme de cellules bi-dimensionnelles en positionnant les cellules sur la bande de données à des emplacements définis sur le support, les cellules pour le stockage de données, contenant chacune un parmi deux modèles différents, avec un décodeur qui présente des moyens pour la reconnaissance des modèles par corrélation des cellules bi-dimensionnelles avec des modèles de recherche prédéterminés, et avec des moyens pour rechercher dans des bandes de données soumises à lecture, des images des modèles bi-dimensionnelles, **caractérisé en ce que** les modèles de recherche sont positionnés sur le support imprimé.

12. Dispositif selon la revendication 11 **caractérisé en ce que** le décodeur présente des moyens pour mesurer la distorsion ou l'erreur d'inclinaison locale des modèles, en déterminant, lors de la reconnaissance des modèles, l'emplacement où le modèle se situe et en le comparant avec une position de consigne définie.

13. Dispositif selon la revendication 10 ou 11, **caractérisé en ce que** le décodeur présente des moyens pour inverser des modèles.

14. Dispositif selon au moins l'une des revendications 10 à 13, **caractérisé en ce que** sont prévues à l'intérieur des cellules de la bande de données, des surfaces imprimées et non-imprimées d'environ la même taille.

15. Dispositif selon au moins l'une des revendications 10 à 14, **caractérisé en ce que** les modèles présentent différentes formes géométriques et/ou distributions de luminosité.

16. Dispositif selon au moins l'une des revendications 10 à 15, **caractérisé en ce que** les modèles présentent au moins deux couleurs différentes et sont codés par échange des couleurs.

17. Dispositif selon au moins l'une des revendications 10 à 16, **caractérisé en ce que** des informations perceptibles par l'homme, en particulier des informations visuelles, sont superposées sur les informations stockées.

18. Dispositif selon au moins l'une des revendications 10 à 17, **caractérisé en ce que** la bande de données présente différentes tailles et/ou modèles.

19. Dispositif selon au moins l'une des revendications 10 à 18, **caractérisé en ce que** les modèles utilisés pour le codage sont positionnés dans des cellules définies et/ou selon une séquence déterminée sur le support.

20. Dispositif selon au moins l'une des revendications 10 à 18, **caractérisé en ce que**, suite au captage de signaux caractéristiques, des zones de la bande de données ne sont pas codées.
